# EUROPÄISCHE PATENTANMELDUNG

(11) **EP 4 124 246 A1**
(43) Veröffentlichungstag der Anmeldung: **01.02.2023**
(21) Anmeldenummer: 21188359.0
(22) Anmeldetag: 29.07.2021
(51) Int. Cl.: A23L 29/212, A23C 20/00, A23C 20/02, A23L 29/256, A23L 33/115, A23L 33/16, A23L 33/185, A23L 33/21

(54) **VEGANE KÄSEALTERNATIVE**

(71) Anmelder: Heinrichsthaler Milchwerke GmbH, 01454 Radeberg (DE)
(72) Erfinder: WÄHNER, Gudrun, 01896 Pulsnitz (DE); KRAUSE, Daniel, 01279 Dresden (DE)
(74) Vertreter: Eisenführ Speiser

(57) **Zusammenfassung**

Die vorliegende Erfindung liegt auf dem Gebiet der Nahrungsmittel und bezieht sich auf Alternativen zu tierischen Produkten, insbesondere Milchprodukten. Die Erfindung stellt ein Lebensmittelprodukt, vorzugsweise einen veganen Käseersatz auf Basis von Seitan, bereit. Weiterhin wird ein Verfahren zur Herstellung eines Lebensmittelproduktes, vorzugsweise eines veganen Käseersatzes bereitgestellt, sowie die Verwendung von Seitan zur Herstellung eines Lebensmittelproduktes, vorzugsweise eines veganen Käseersatzes.

## Beschreibung

Die vorliegende Erfindung liegt auf dem Gebiet der Nahrungsmittel und bezieht sich auf Alternativen zu tierischen Produkten, insbesondere Milchprodukten. Die Erfindung stellt ein Lebensmittelprodukt, vorzugsweise einen veganen Käseersatz auf Basis von Seitan, bereit. Weiterhin wird ein Verfahren zur Herstellung eines Lebensmittelproduktes, vorzugsweise eines veganen Käseersatzes bereitgestellt, sowie die Verwendung von Seitan zur Herstellung eines Lebensmittelproduktes, vorzugsweise eines veganen Käseersatzes.

Das Bewusstsein für eine gesunde Ernährungsweise ist in den letzten Jahren unter Verbrauchern kontinuierlich gestiegen. So beinhaltet eine gesunde Ernährungsweise das Bereitstellen aller wichtigen Nährstoffe für den Körper ohne übermäßigen Konsum von Fetten, Salz und Zucker. Neben einer gesunden und ausgewogenen Ernährung rückt auch immer mehr das Thema der überwiegenden pflanzlichen Ernährung in den gesellschaftlichen Fokus. Eine vegetarische Lebensweise verzichtet auf den Konsum von Fleisch; einige tierische Produkte wie Eier, Milch und Honig sind weiterhin Teil des vegetarischen Speiseplans. Ein Umschwung auf eine vegetarische Lebensweise besitzt demnach einen positiven Einfluss auf das Klima. So wird bei der Produktion von einem Kilogramm Rindfleisch etwa 12 kg CO₂ freigesetzt. Im Vergleich dazu wird für die Produktion eines Kilogramm Kartoffeln etwa 0,5 kg CO₂ freigesetzt. Bei Vermeidung von Fleisch als Teil der Ernährung kann ein großer Teil CO₂ eingespart werden.

Doch auch die Produktion von Milch oder Milchprodukten, welche in der vegetarischen Ernährungsweise auf dem Speiseplan stehen, führt einige Nachteile mit sich. So werden Kühe für die Produktion von Milch gehalten, welche einerseits selber pflanzliches Futter benötigen, als auch das klimaschädliche Methangas ausstoßen. Die Herstellung eines Liters Kuhmilch setzt etwa 1,3 kg CO₂ frei.

Der Einfluss der eigenen Ernährungsweise auf das Klima sowie Aspekte des Tierwohls sind allgemein die Hauptmotivatoren für den Entschluss, eine vegane Ernährung zu wählen. Diese Ernährungsform bezieht sich ausschließlich auf den Verzehr von pflanzlichen Lebensmitteln. Trotz des Verzichtes auf tierische Produkte, ist es wichtig, dass der menschliche Körper mit allen essenziellen Nährstoffen versorgt wird. Daher ist der Bedarf nach veganen Ersatzprodukten für tierische Produkte kontinuierlich hoch.

Insbesondere der Absatz von veganen Ersatzprodukten für Milchprodukte hat in den Jahren 2018 bis 2020 kontinuierlich zugenommen. So erhöhte sich der Umsatz für vegane Milchalternativen von 170 Mio. € im Jahre 2018 auf 350 Mio. € im Jahre 2020. Auch der Umsatz von veganen Käsealternativen erhöhte sich von 13 Mio. € im Jahre 2018 auf 40 Mio. € im Jahre 2020.

Es existieren eine Vielzahl von veganen Milchproduktalternativen. Meist wird für die Herstellung von veganen Käseersatzprodukten Sojaprotein, Pflanzenöle, Nährhefe, verdickte Agrarflocken oder Nüsse verwendet. So beschreibt die europäische Patentanmeldung EP3603407A1 die Herstellung eines Käses auf der Basis von ölhaltigen Saaten. Hierbei unterscheidet sich der Herstellungsprozess kaum von dem Prozess zur Herstellung eines tierischen Käses. Aus den ölhaltigen Saaten wird zunächst eine "Milch" hergestellt, welche anschließend fermentiert wird. Hierbei entsteht ein typischer Käsebruch, welcher anschließend zu einem Käse geformt und gereift wird.

Eine weitere europäische Anmeldung EP3231645A2 offenbart eine Käsealternative auf Basis von Stärke und Pflanzenölen zur Herstellung eines Weichkäses unter Verwendung eines Geliermittels.

In der internationalen Patentanmeldung WO2020089383A1 wird ein veganer Käseersatz offenbart, welcher auf Basis von Ballaststoffen, Calcium, Lipiden und Pflanzenprotein hergestellt wird. Auch die amerikanische Patentanmeldung US20170020156A1 offenbart eine vegane Käsealternative mit Ballaststoffen sowie zugesetztem Proteinkonzentrat.

Der Bedarf an veganen Milchersatzprodukten, die gleichzeitig ein vergleichbares Nährwertspektrum mit natürlichen Milchprodukten besitzen, ist im Zuge einer vollwertigen Ernährung kontinuierlich hoch. So ist einer der Nachteile von pflanzlichen Zubereitungen, dass diese allgemein einen geringeren Anteil an Proteinen als tierische Zubereitungen enthalten. Im Zuge einer vollwertigen Ernährung ist es erstrebenswert, dass vegane Milchersatzprodukte einen hohen Proteingehalt haben. Alle oben genannten veganen Käsealternativen zeichnen sich durch einen geringen Proteingehalt sowie durch die Verwendung verschiedener Zusatzstoffe zur Erreichung einer käseähnlichen Konsistenz aus.

Die deutsche Patentanmeldung DE102018212628A1 stellt ein Verfahren zur Herstellung eines veganen Lebensmittelproduktes bereit, welches auf der Verwendung von Pflanzenprotein, Fetten und einem zusätzlichen Verdickungsmittel basiert. Zusätzlich wird ein Geliermittel verwendet, um eine schneidfähige Konsistenz des fertigen Produktes zu erreichen. In dieser Patentanmeldung werden nur Zubereitungen auf Basis von Soja, Lupinen, Reis und Erbsenprotein offenbart.

Allgemein ist es vorteilhaft, regionale Produkte für die Herstellung von veganen Käseersatzprodukten zu verwenden, da so eine weitere Reduzierung des CO₂ Ausstoßes erreicht werden kann. Auch sollte der Prozess zur Herstellung einer solchen veganen Käsealternative möglichst ökonomisch sein.

Daher war es die Aufgabe der vorliegenden Erfindung, ein veganes Lebensmittel bereitzustellen, welches sich in seinem Proteingehalt kaum von einem tierischen Lebensmittel unterscheidet und sich durch die gute Verfügbarkeit der verwendeten Ausgangsstoffe auszeichnet. Weiterhin war es die Aufgabe der vorliegenden Erfindung ein Verfahren zur Herstellung dieses Lebensmittelproduktes bereitzustellen.

Diese Aufgaben wurde primär durch die Bereitstellung eines Lebensmittelprodukts, vorzugsweise eines veganen Käseersatzes, bestehend aus oder umfassend, jeweils bezogen auf das Gesamtgewicht des Lebensmittelprodukts,
a) 5 - 30 Gew.-% pflanzliches Fett,
b) 30 - 80 Gew.-% Wasser,
c) 1 - 30 Gew.-% Gluten,
d) 1 - 40 Gew.-% Verdickungsmittel,
e) 0,1 - 2 Gew.-% Ballaststoff,
f) 0,1 - 5 Gew.-% Genusssäure, und
g) 0,1 - 10 Gew.-% Aromastoff.

Gluten bezeichnet die Proteine aus Weizen (*Triticum aestivum*)*,* welche sich aus den beiden Proteinen Gliadin und Glutenin zusammensetzen. Das in dem veganen Käseersatz vorhandene Gluten stammt vorzugsweise aus Seitan als Einsatzstoff. Gliadin und Glutenin haben eine unterschiedliche Aminosäurezusammensetzung. Die Aminosäuren Prolin und Glutamin sind vor allem in Gliadin vorherrschend. Es wurde im Kontext der vorliegenden Erfindung überraschenderweise herausgefunden, dass bei dem erfindungsgemäßen Einsatz von Gliadin und Glutenin ein vorteilhaftes Aminosäureprofil im Lebensmittelprodukt erreicht wird.

Seitan ist eine Form des Glutens, welches in Japan in den 1960er Jahren entwickelt wurde. Seitan wird vor allem als Fleischalternative verwendet, da es nach der Verarbeitung eine fleischähnliche Konsistenz besitzt und einen hohen Proteingehalt aufweist. Seitan wird hergestellt, indem ein Teig aus Wasser und Weizenmehl hergestellt wird, welcher anschließend immer wieder gewaschen und so die enthaltene Stärke entfernt wird. Der erhaltene Rohseitan kann dann gedämpft und als Fleischersatz verwendet werden.

Im Zuge der vorliegenden Erfindung ist es vorteilhaft, wenn der erhaltene Rohseitan getrocknet und gemahlen wird. Dieses Seitanpulver kann dann als Ausgangsstoff für die Herstellung des Lebensmittelproduktes, vorzugsweise des veganen Käseersatzes verwendet werden.

Der Vorteil der Verwendung von Gluten aus Seitan als Ausgangsprodukt ist der besonders hohe Proteingehalt sowie die regionale Verfügbarkeit von Weizen als Ausgangsprodukt. Obwohl Seitan bisher nur für seine fleischähnliche, feste, Konsistenz bekannt ist, konnte überraschenderweise herausgefunden wurden, dass sich das hierin bereitgestellte Lebensmittelprodukts durch eine weiche Textur und Schnittfestigkeit auszeichnet, welche einem Käseprodukt aus tierischer Milch in seiner Sensorik ähnelt. Weiterhin besitzt ein derartiges Lebensmittelprodukt, vorzugsweise ein derartiger Käseersatz, einen sehr hohen Proteingehalt.

Der Begriff "Genusssäure" bezeichnet organische Säuren, Fruchtsäuren oder Phosphorsäuren, welche aufgrund ihres Geschmacks und anderer lebensmitteltechnisch vorteilhaften Eigenschaften als Zusatzstoffe in der Lebensmittelproduktion eingesetzt werden. Vorzugsweise, im Rahmen der vorliegenden Erfindung, sind die Genusssäuren ausgewählt aus der Gruppe bestehen aus Milchsäure, Weinsäure, Essigsäure, Apfelsäure, Zitronensäure oder Fumarsäure. Auch wenn ein erfindungsgemäßes Lebensmittelprodukt solche Genusssäuren, die im Rahmen der vorliegenden Erfindung gegebenenfalls (auch) aufgrund ihres Geschmacks eingesetzt werden, enthalten kann, sind die Genusssäuren im Rahmen des vorliegenden Textes nicht dem "Aromastoff" im Sinne des Anspruchswortlauts zuzuordnen (für bevorzugt zu verwendende Aromastoffe s. unten). Solche (weiteren) Aromastoffe sind also stets zusätzlich enthalten.

Verdickungsmittel sind Stoffe, die die Viskosität eines Lebensmittels erhöhen. Das im Kontext der vorliegenden Erfindung verwendete Verdickungsmittel ist vorzugsweise ausgewählt aus der Funktionsklasse der Verdickungsmittel gemäß Zusatzstoff-Zulassungsverordnung (ZZulV).

Ballaststoffe sind weitgehend unverdauliche Nahrungsbestandteile, meistens Kohlenhydrate, welche meistens in pflanzlichen Lebensmitteln vorkommen und ein wichtiger Bestandteil der menschlichen Ernährung sind.

In einer bevorzugten Ausführungsform der vorliegenden Erfindung ist das pflanzliche Fett ausgewählt aus der Gruppe bestehend aus Kokosöl, Rapsöl, Palmöl oder Sonnenblumenöl.

In einer weiteren bevorzugten Ausführungsform der vorliegenden Erfindung ist das Verdickungsmittel ausgewählt aus der Gruppe bestehend aus Stärke, Guakernmehl, Xanthan, Carrageen oder Mischungen davon. Carrageen ist ein Extrakt aus Rotalgen.

In einer ganz bevorzugten Ausführungsform der vorliegenden Erfindung ist das Verdickungsmittel Stärke. Stärke ist ein Polysaccharid, welches aus alpha-D-Glukose Einheiten besteht und als native oder modifizierte Stärke in der Lebensmittelindustrie eingesetzt wird.

In wiederum einer weiteren bevorzugten Ausführungsform der vorliegenden Erfindung ist der Ballaststoff ausgewählt aus der Gruppe bestehend aus Inulin, Johannisbrotkernmehl, Pektin, Dextrin, Maltodextrin, Cellulose, Lignin und Alginat oder Mischungen davon.

In einer bevorzugten Ausführungsform der vorliegenden Erfindung ist der Aromastoff ausgewählt aus der Gruppe bestehend aus Sahnearoma, Butter-Sahne-Aroma, Frischkäsearoma, Ziegenkäsearoma, Bergkäsearoma, natürliches Käsearoma, Käsearoma "Typ Gouda" , Käsearoma "Typ Cheddar" oder Mischungen davon oder Aromastoffmischungen enthaltend einen solchen Aromastoff / eine solche Mischung sowie zudem noch einen oder mehrere weitere Aromastoffe.

Weiterhin ist ein Lebensmittelprodukt im Kontext der vorliegenden Erfindung bevorzugt, welches mindestens einen weiteren Bestandteil umfasst, welcher ausgewählt ist aus der Gruppe bestehend aus kurzkettigen Kohlehydraten, Farbstoffen, Salzen und Aminosäuren, vorzugsweise Lysin,
und/oder mindestens ein kurzkettiges Kohlehydrat ausgewählt aus der Gruppe bestehend aus Glucose, Fructose, Sucrose, und Maltose,
und/oder mindestens ein Salz ausgewählt aus der Gruppe bestehend aus Natriumchlorid, Magnesiumchlorid und Kaliumchlorid,
und/oder mindestens einen Farbstoff,
und/oder mindestens eine Aminosäure, wobei das Lebensmittel besonders bevorzugt zusätzlich Lysin enthält.

Eine Aminosäure im Kontext der vorliegenden Erfindung bezeichnet jede proteinogene Aminosäure.

In einer bevorzugten Ausführungsform ist das Lebensmittelprodukt ein veganer Käseersatz, bestehend aus oder umfassend, jeweils bezogen auf das Gesamtgewicht des veganen Käseersatzes,
a) 5 - 30 Gew.-%, vorzugsweise 5 - 20 Gew.-%, besonders bevorzugt 5 - 15 Gew.-% pflanzliches Fett;
b) 30 - 80 Gew.-%, vorzugsweise 50 - 80 Gew.-%, besonders bevorzugt 60 - 80 Gew.-% Wasser;
c) 1 - 30 Gew.-%, vorzugsweise 4 - 20 Gew.-%, besonders bevorzugt 5 - 10 Gew.-% Gluten;
d) 1 - 40 Gew.-% Stärke;
e) 0,1 - 2 Gew.-% Inulin;
f) 0,1 - 5 Gew.-% Apfelsäure oder Milchsäure;
g) 1 - 5 Gew.-% Carrageen;
h) 0,1 - 2 Gew.-% Aromastoff, und
i) 0,1 - 5 Gew.-% Natriumchlorid.

Ein weiterer Aspekt der vorliegenden Erfindung bezieht sich auf ein Verfahren zum Herstellen eines Lebensmittelproduktes, vorzugsweise eines veganen Käseersatzes, vorzugsweise eines Lebensmittelprodukts wie hierin beschrieben, umfassend oder bestehend aus den Schritten:
I)
   i) Bereitstellen von Wasser, Seitan, pflanzlichem Fett und Verdickungsmittel, Ballaststoff und Genusssäure sowie optional einem oder mehreren weiteren Bestandteilen;
   ii) Mischen der in Schritt i) bereitgestellten Bestandteile;
   iii) Emulgieren unter Erwärmen der Mischung aus Schritt ii) bis zu einer Temperatur im Bereich von 30 bis 45°C, vorzugsweise 35 bis 40 °C;
   iv) Homogenisieren der Mischung bei einem Energieeintrag von 50.000 J/kg bis 300.000 J/kg, bezogen auf die Masse der Mischung, ohne zusätzlichen Eintrag von thermischer Energie, bis die Mischung eine Temperatur im Bereich von 55 bis 70 °C erreicht hat, vorzugsweise im Bereich von 63°C bis 66 °C;
   v) Hinzufügen der Aromastoffe und Erwärmen der Mischung unter Rühren auf eine Temperatur im Bereich von 75 bis 95°C, vorzugsweise im Bereich von 80 bis 90°C und Beibehalten dieser Temperatur für eine Zeit von 1 bis 10 Minuten, vorzugsweise für eine Zeit von 2 bis 6 Minuten;
   vi) Abfüllen und/oder Portionieren der Mischung aus Schritt II) iii) und Abkühlen dieser, vorzugsweise bis die Mischung eine Temperatur im Bereich von 2 bis 8 °C erreicht hat;
   vii) Erhalten eines Lebensmittelprodukts, vorzugsweise eines veganen Käseersatzes.

Das in Schritt I i) bereitgestellte Seitan ist vorzugsweise getrocknetes Seitan und besitzt eine Restfeuchte von < 5 Gew.-% Wasser, basierend auf der Gesamtmenge des getrockneten Seitans, vorzugsweise bestimmt nach / durch Trocknung (Loss on Drying).

Der Schritt des Mischens bezeichnet eine gleichmäßige Verteilung der Einsatzstoffe. Vorzugsweise wird der Schritt des Mischens mit einem Rührer ausgewählt aus der Gruppe bestehend aus Propellerrührer, Schrägblattrührer, Scheibenrührer, Impellerrührer oder einem Blattrührer durchgeführt.

Emulgieren im Kontext der vorliegenden Erfindung bezeichnet das Vermischen zweier normalerweise nicht mischbarer Flüssigkeiten zur Bildung einer Emulsion, welche ein fein verteiltes Gemisch darstellt. Im erfindungsgemäßen Verfahren sind Wasser und pflanzliches Fett normalerweise nicht mischbar. Durch den Schritt des Emulgierens werden diese durch ausreichend hohen Energieeintrag so vermischt, dass eine Mischung erhalten wird, in welcher die Fetttröpfchen fein verteilt vorliegen und sich Wasser und pflanzliches Fett nicht entmischen. Der Schritt des Emulgierens wird vorzugsweise mittels eines Rührers wie oben beschrieben durchgeführt. Hierbei wird thermische Energie zugeführt, indem die zu emulgierende Mischung auf eine Temperatur im Bereich von 30 bis 45°C, vorzugsweise 35 bis 40°C, erwärmt wird.

Homogenisieren im Kontext der vorliegenden Erfindung bezeichnet ein Verfahren zur Vergrößerung der Homogenität eines Systems. Durch sehr hohe Energieeinträge von 50.000 J/kg bis 300.000 J/kg werden die einzelnen, nicht mischbaren, Komponenten eines Systems nach dem Emulgieren weiter zerkleinert. Überraschenderweise wurde im Rahmen der vorliegenden Erfindung herausgefunden, dass für die Erreichung der gewünschten Textur des Lebensmittelproduktes keine weitere Zuführung von thermischer Energie in Form des Erhitzens der zu homogenisierenden Mischung erforderlich ist. Weiterhin wurde herausgefunden, dass die Mischung eine optimale Konsistenz besitzt, wenn diese so lange homogenisiert wurde, bis sie eine Temperatur von 55 bis 70 °C erreicht hat, vorzugsweise eine Temperatur von 63°C bis 66 °C.

Der Schritt des Erhitzens (Schritt v)) erfolgt vorzugsweise zur Aktivierung des Verdickungsmittels, besonders bevorzugt zur Aktivierung der Stärke.

Das Abkühlen in Schritt vi) erfolgt vorzugsweise über einen Zeitraum von 24 bis 72 Stunden.

In einer bevorzugten Ausführungsform des Verfahrens gemäß der vorliegenden Erfindung ist die in Schritt i) bereitgestellte Genusssäure ausgewählt aus der Gruppe bestehend aus Milchsäure, Weinsäure, Essigsäure, Apfelsäure, Zitronensäure oder Fumarsäure.

In einer weiteren bevorzugten Ausführungsform des erfindungsgemäßen Verfahrens werden in Schritt i) oder v) mindestens ein weiterer Bestandteil bereitgestellt, ausgewählt aus der Gruppe bestehend aus kurzkettigen Kohlehydraten, Farbstoffen, Salzen und Aminosäuren,
und/oder mindestens ein kurzkettiges Kohlehydrat ausgewählt aus der Gruppe bestehend aus Glucose, Fructose, Sucrose und Maltose,
und/oder mindestens ein Salz ausgewählt aus der Gruppe bestehend aus Natriumchlorid, Magnesiumchlorid und Kaliumchlorid,
und/oder mindestens ein Farbstoff,
und/oder mindestens eine Aminosäure, besonders bevorzugt Lysin.

Eine bevorzugte Ausführungsform des erfindungsgemäßen Verfahrens bezieht sich auf ein Verfahren, wobei in Schritt II) ii) als (ein) weiterer Bestandteil Lysin hinzugefügt wird.

Eine weitere bevorzugte Ausführungsform des erfindungsgemäßen Verfahrens bezieht sich auf ein Verfahren, wobei das erhaltene Lebensmittelprodukt ein veganer Käseersatz ist und der in Schritt II v) erhaltene vegane Käseersatz beschimmelt wird, vorzugsweise mit einem Schimmelpilz ausgewählt aus der Gruppe bestehend aus *Geotrichum candidum, Penicillium candidum, Penicillium roqueforti.*

"Beschimmeln" im Kontext der vorliegenden Erfindung bezeichnet das Inokulieren des mit einem erfindungsgemäßen Verfahren erhaltenen Käseersatzes mit Sporen der oben beschriebenen Edelschimmel und anschließender Reifung des erhaltenen veganen Käseersatzes, vorzugsweise für 7 bis 14 Tage.

In dieser bevorzugten Ausführungsform wird ein veganer Käseersatz nach Art eines Camemberts, Roquefort, Brie, Gorgonzola oder Malghesino hergestellt. Die vorliegende Erfindung ist nicht auf die Herstellung einer dieser Käsesorten beschränkt.

Weiterhin bezieht sich die vorliegende Erfindung gemäß einem Aspekt auf ein Lebensmittelprodukt, vorzugsweise einen veganen Käseersatz, welcher nach einem erfindungsgemäßen Verfahren hergestellt wird. Bevorzugte Ausgestaltungen davon ergeben sich aus den obigen Ausführungen.

Auch bezieht sich die vorliegende Erfindung auf die Verwendung von Gluten, vorzugsweise aus Seitan, zur Herstellung eines veganen Käseersatzes, vorzugsweise eines erfindungsgemäßen veganen Käseersatzes wie hierin definiert und/oder vorzugsweise in einem Verfahren wie hierin definiert.

Nachfolgend wird die hierin beschriebene Erfindung durch illustrative, nicht limitierende Beispiele beschrieben.

### Beispiele

### 1. Herstellung eines veganen Käseersatzes

In einem ersten Verfahrensschritt werden Wasser, pflanzliches Fett, Stärke, Seitan, Salz, Carrageen, Inulin, Farbstoff "Yellow" und Milchsäure bereitgestellt und für 5 Minuten bei 40 °C emulgiert. Die Gewichtszusammensetzungen sind aus Tabelle 1 ersichtlich.

**Tabelle 1: Formulierungen veganer Käseersatz**

| Einsatzstoff / Formulierung | 1 (Typ Schnittkäse) | 2 (Typ Weichkäse) |
|---|---|---|
| Wasser | 350 g | 740 g |
| Pflanzliches Fett | 200 g Kokosöl | 100 g Sonnenblumenöl |
| Stärke | 250 g | 50 g |
| Seitan | 150 g | 50 g |
| Salz (Natriumchlorid) | 10 g | 10 g |
| Carrageen | 20 g | 30 g |
| Inulin | 5 g | 10 g |
| Farbstoff "Yellow" | 2,5 g | 2,5 g |
| Milchsäure | 2,5 g | 5 g |
| Total | 990 g | 990 g |

Anschließend wird die Grundmasse ohne Wärmezufuhr homogenisiert bis die Masse eine Temperatur von 65°C erreicht. Dieser Prozess dauert etwa 5 Minuten.

Anschließend werden 3 g Sahnearoma und 7 g Frischkäsearoma zu der erhaltenen homogenisierten Masse hinzugefügt und anschließend unter Rühren für 6 Minuten auf 90 °C erhitzt um die Stärke zu aktivieren; anschließend wird die Temperatur von 90 °C für 3 Minuten beibehalten.

Die Masse wird anschließend heiß abgefüllt (z.B. in einen veganen Darm) und anschließend gekühlt.

Der erhaltene, vegane Käseersatz kann nun für den Handel verpackt werden oder zur Herstellung eines beschimmelten Käseersatzes (Typ Weichkäse) verwendet werden.

### 2. Herstellung eines beschimmelten Käseersatzes (Typ Weichkäse)

Es wird ein veganer Käseersatz (Typ Weichkäse) wie im Beispiel 1, Formulierung 2 beschrieben hergestellt. Dieser wird nach der Kühlung in Portionsgrößen geschnitten und mit dem Pilz *Geotrichum candidum* inokuliert. Anschließend wird der Käseersatz für 14 Tage gereift, bis sich ein vollständiger Edelpilzmantel um den Käseersatz gebildet hat. Nach der Reifung wird der Käseersatz für etwa 5 - 20 Minuten bei 70 bis 200 °C thermisch behandelt, um die im Schimmel gebildeten Proteasen zu inaktivieren.

Der erhaltene beschimmelte Käseersatz (Typ Weichkäse) kann anschließend für den Handel verpackt werden.

## Patentansprüche

1. Lebensmittelprodukt, vorzugsweise veganer Käseersatz, bestehend aus oder umfassend, jeweils bezogen auf das Gesamtgewicht des Lebensmittelprodukts,
a) 5 - 30 Gew.-% pflanzliches Fett,
b) 30 - 80 Gew.-% Wasser,
c) 1 - 30 Gew.-% Gluten,
d) 1 - 40 Gew.-% Verdickungsmittel,
e) 0,1 - 2 Gew.-% Ballaststoff,
f) 0,1 - 5 Gew.-% Genusssäure, und
g) 0,1 - 10 Gew.-% Aromastoff.

2. Lebensmittelprodukt nach Anspruch 1, wobei das pflanzliche Fett ausgewählt ist aus der Gruppe bestehend aus Kokosöl, Rapsöl, Palmöl oder Sonnenblumenöl.

3. Lebensmittelprodukt nach Anspruch 1 oder 2, wobei das Verdickungsmittel ausgewählt ist aus der Gruppe bestehend aus Stärke, Guakernmehl, Xanthan, Carrageen oder Mischungen davon.

4. Lebensmittelprodukt nach einem der vorhergehenden Ansprüche, wobei der Ballaststoff ausgewählt ist aus der Gruppe bestehend aus Inulin, Johannisbrotkernmehl, Pektin, Dextrin, Maltodextrin, Cellulose, Lignin und Alginat.

5. Lebensmittelprodukt nach einem der vorangehenden Ansprüche, umfassend mindestens einen weiteren Bestandteil, ausgewählt aus der Gruppe bestehend aus
- kurzkettige Kohlehydrate,
- Farbstoffe,
- Salze,
- Aminosäuren, vorzugsweise Lysin.

6. Verfahren zum Herstellen eines Lebensmittelproduktes, vorzugsweise eines veganen Käseersatzes, vorzugsweise eines Lebensmittelprodukts nach einem der vorangehenden Ansprüche, umfassend oder bestehend aus den Schritten:
I)
i) Bereitstellen von Wasser, Seitan, pflanzlichem Fett, Verdickungsmittel, Ballaststoff und Genusssäure sowie optional einem oder mehreren weiteren Bestandteilen;
ii) Mischen der in Schritt i) bereitgestellten Bestandteile;
iii) Emulgieren unter Erwärmen der Mischung aus Schritt ii) bis zu einer Temperatur im Bereich von 30 bis 45°C, vorzugsweise 35 bis 40 °C;
iv) Homogenisieren der Mischung bei einem Energieeintrag von 50.000 J/kg bis 300.000 J/kg, bezogen auf die Masse der Mischung, ohne zusätzlichen Eintrag von thermischer Energie, bis die Mischung eine Temperatur im Bereich von 55 bis 70 °C erreicht hat, vorzugsweise im Bereich von 63°C bis 66°C;
v) Hinzufügen eines oder mehrerer Aromastoffe und Erwärmen der Mischung unter Rühren auf eine Temperatur im Bereich von 75 °C bis 95 °C, vorzugsweise im Bereich von 80 °C bis 90 °C und Beibehalten dieser Temperatur für eine Zeit von 1 bis 10 Minuten, vorzugsweise für eine Zeit von 2 bis 6 Minuten;
vi) Abfüllen und/oder Portionieren der Mischung aus Schritt II) iii) und Abkühlen dieser, vorzugsweise bis die Mischung eine Temperatur im Bereich von 2 bis 8 °C erreicht hat;
vii) Erhalten eines Lebensmittelprodukts, vorzugsweise eines veganen Käseersatzes.

7. Verfahren nach Anspruch 6, wobei in Schritt i) oder v) als (ein) weiterer Bestandteil Lysin hinzugefügt wird.

8. Verfahren nach Anspruch 6 oder 7, wobei das Lebensmittelprodukt ein veganer Käseersatz ist und der in Schritt vii) erhaltene Käseersatz beschimmelt wird, vorzugsweise mit einem Schimmelpilz ausgewählt aus der Gruppe bestehend aus *Geotrichum candidum, Penicillium candidum, Penicillium roqueforti.*

9. Lebensmittelprodukt, vorzugsweise veganer Käseersatz, erhältlich nach einem Verfahren gemäß einem der Ansprüche 6 bis 8.

10. Verwendung von Gluten, vorzugsweise aus Seitan, zur Herstellung eines veganen Käseersatzes, vorzugsweise eines veganen Käseersatzes wie in einem der Ansprüche 1 bis 5 oder 9 definiert und/oder vorzugsweise in einem Verfahren wie in einem der Ansprüche 6 bis 8 definiert.
